# EUROPEAN PATENT SPECIFICATION

(11) **EP 3 725 732 B1**
(45) Date of publication and mention of the grant of the patent: **19.04.2023**
(21) Application number: 18889769.8
(22) Date of filing: 25.04.2018
(51) Int. Cl.: B66F 7/04, B66F 7/28, B66F 7/20, B60L 53/30, B60L 53/80, B60S 5/06

(54) **VEHICLE LIFTING MECHANISM AND AUTOMATIC POWER CONVERSION SYSTEM**
FAHRZEUGHEBEMECHANISMUS UND AUTOMATISCHES LEISTUNGSWANDLUNGSSYSTEM
MÉCANISME DE LEVAGE DE VÉHICULE ET SYSTÈME DE CONVERSION DE PUISSANCE AUTOMATIQUE

(30) Priority: 15.12.2017 CN 201711351560
(43) Date of publication of application: 21.10.2020
(73) Proprietor: NIO (Anhui) Holding Co., Ltd, Hefei City, Anhui Province (CN)
(72) Inventor: DING, Xikun, Shanghai 201804 (CN)
(74) Representative: Hansson Thyresson AB
(86) International application number: PCT/CN2018/084435
(87) International publication number: WO 2019/114170

(56) References cited:
- EP-A2- 0 473 238
- WO-A1-88/07496
- WO-A1-2008/142469
- CN-A- 104 787 010
- CN-A- 104 842 962
- CN-U- 202 169 933
- CN-U- 206 069 282
- FR-A1- 2 895 737
- US-A- 3 415 342
- US-A- 5 284 224
- US-A1- 2017 259 675

## Description

### Technical Field

The invention relates to the technical field of battery swapping for electric vehicles, and in particular to a vehicle lifting mechanism and an automated battery swap system.

### Background Art

At present, there are many kinds of automated battery swap systems. The vehicle lifting, vehicle positioning and platform structures as well as principles for each of the battery swap systems are quite different, and the battery swap processes are also not the same.

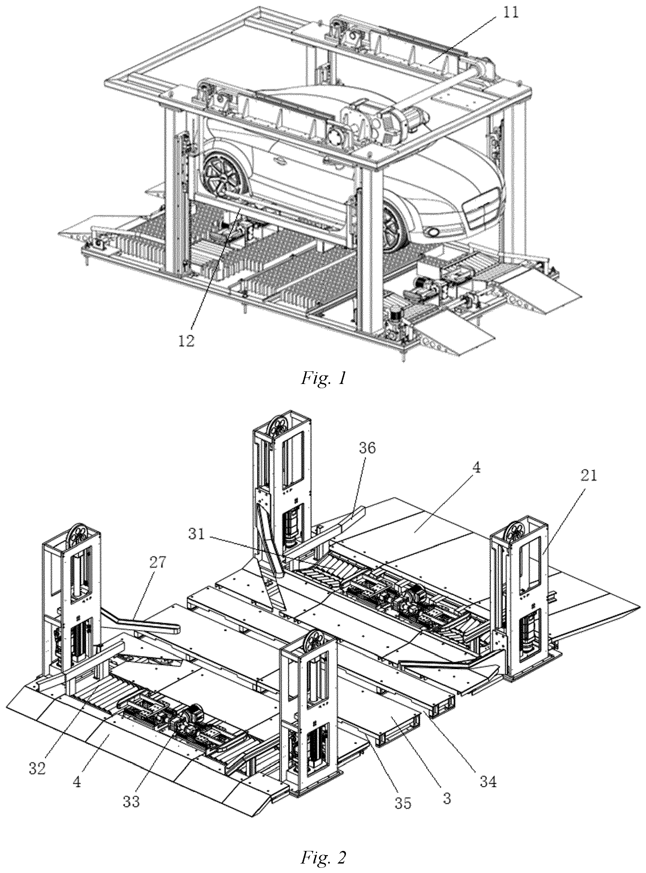

Fig. 1 shows a lifting platform of a battery swap system in the prior art, the system having a vehicle lifting mechanism 11, a coarse vehicle positioning mechanism, a vehicle entry electric overturn ramp and an entry guide, a vehicle tire footboard 12, and a guide rail embedding groove, etc. The main disadvantages thereof comprise:
1) the vehicle lifting mechanism is arranged at the top of the battery swap platform, resulting in a very large height of the entire battery swap system, which may affect the deployment in underground parking garages; and
2) a driving mechanism and a motion adjusting mechanism of a lifting arm of the vehicle lifting mechanism are complicated in structure, high in costs, difficult to maintain and low in lifting efficiency.

EP0473238A2 relates to a vehicle lifting device (1) comprising at least one column (2), with a vertically movable carriage (3) to which bearing arms (8) for supporting a vehicle are connected and drive means for moving the carriage (3) upward, wherein at least one of the bearing arms (8) of the carriage (3) comprises a base arm (40) pivotally connected to the carriage (3) and having a telescopically extending arm portion (41) which comprises on its free end a carrier (9) formed by a horizontal bearing platform with a downward protruding screw body (48) received in a screw-threaded hole (49) of the arm portion (41). The extending arm portion (41) comprises on its free end a mould-formed extension piece (44) in which the threaded hole (49) receiving the carrier (9) is formed and which comprises a protective cap (51,52) extending downward around the elongation of the threaded hole (49) and enclosing the bottom end of the screw body (48). EP0473238A2 discloses a vehicle lifting mechanism according to the preamble of the independent claim 1.

US3415342A provides a vehicle lifting apparatus. A vehicle is raised by a frame contact lift having four rails pivoted on a carriage vertically driven by a floor-mounted jacking unit located on one side of the vehicle. Alignment of the vehicle relative to the jacking unit and carriage is indicated by a wheel locator plate and, in one embodiment, by braces or gussets adjacent the floor and the vehicle lift chassis. A semihudraulic jacking unit is provided with a low oil control vlave and a speed control valve. The latter valve opens to increase the descending speed of the carriage as the vehicle engages the floor.

WO8807496A1 discloses a lift usually used in a garage for better inspection or repair thereof. The lift has two fixed uprights (1, 1') securely fixed to the ground each of which uprights has carrier member (3, 3') by which automotive vehicles are carried. One upright has an air tank (5) thereinside. Even in case of a power failure the lift can be operated by means of the air stored in the air tank (5) or by other means.

FR2895737A1 is directed to a column lift for heavy vehicles having a vertical guide rail, up which a carriage (5) moves. The rail is made up of two UPE profiles (13a, 13b) mounted with their open sides facing each other. These are connected by a plate (18). An independent claim is included for a similar lift, but with the guide rail consisting of a single IPE profile.

US5284224A disclose**s_**a dual-column vehicle lift having first and second lift columns, each with carriages slidably mounted thereon, and each with piggy-backed hydraulic lift cylinders. The piston rods of each column's piggy-backed lift cylinders extend in opposite directions, one attached to the carriage and the other attached to the base of the lift column. The piggy-backed construction allows a lower collapsed height of the cylinders and also allows a lower lift column height for a given lifting height, thereby allowing use within an area with reduced ceiling clearance. An interconnection tube equalizes hydraulic pressure between the piggy-backed lift cylinders, causing the two cylinders to extend their rods at the same rate. Equalizing cables are provided for ensuring that the carriages on the two lift columns rise and fall together.

WO2008142469A1 discloses a lifting device (1) for lifting laterally a car (30) inclining it on an edge to assist the access from below of the car (30) for maintenance purposes, having a sliding base frame (2), a column (3) connected substantially perpendicularly to said base frame (2); a carriage (23) sliding along said column (3), having a lifting member (12) protruding laterally from the column (3); an hydraulic cylinder (18) having an axis parallel to the column (3) and a first end connected to the column (3) or to the base frame (2) and a second end connected to an idle pulley (21) that operatively is dragged along said axis of the hydraulic cylinder (18); a hydro-pneumatic pump for feeding the hydraulic cylinder (18); a transmission chain (22) engaged on the idle pulley (21), having a first end connected to the column (3) or to the base frame (2) and a second end connected to the carriage (23).

CN206069282U relates to a battery lifting machine comprising a frame and two platforms provided in the frame, said two platforms is used to bear the battery of the vehicle and movable along the frame in a vertical direction. Due to being provided with two lift platforms, when interacts with the trolley, the battery lifting machine can deliver the full-charged battery and take out the lack-power battery at the same time.

### Summary of the Invention

The invention for which protection is sought is defined by the independent claim. The dependent claims concern particular embodiments.

An object of the invention is to provide a vehicle lifting mechanism and an automated battery swap system which can hoist a vehicle by means of a plurality of (preferably four) mutually independent lifting units to reduce the overall height of a battery swap platform, so as to make it suitable to be deployed in an underground parking lot.

The object of the invention is realized by virtue of the following technical solution:
a vehicle lifting mechanism for use in a battery swap platform for lifting a vehicle with a battery to be swapped, the vehicle lifting mechanism comprising a columnar shell, with a hoisting mechanism and a slide trolley being mounted in the shell, wherein a lifting arm is connected to the slide trolley, and the lifting arm is used to support a vehicle lifting point; and the hoisting mechanism is connected to the slide trolley to drive the slide trolley to slide in a vertical direction within the shell, so as to implement ascending and descending actions of the lifting arm.

The object of the invention is further realized by virtue of the following technical measures.

In the foregoing vehicle lifting mechanism, one end of the lifting arm is connected to the slide trolley via a connecting plate, and the other end thereof extends in a direction of the vehicle lifting point.

In the foregoing vehicle lifting mechanism, the slide trolley comprises a first roller set, and the shell is provided with a guide groove formed by parallel guide rails in a sliding direction of the slide trolley, the first roller set being arranged in the guide groove in a scrollable manner.

In the foregoing vehicle lifting mechanism, the slide trolley has a plurality of first roller sets, and the first roller sets are in one-to-one correspondence with the guide grooves.

In the foregoing vehicle lifting mechanism, a plurality groups of the guide grooves are respectively provided on a group of inner walls of the shell that face toward each other.

In the foregoing vehicle lifting mechanism, the slide trolley further comprises a second roller set, a circumferential surface of the second roller set resting against a top surface of one of the guide rails.

In the foregoing vehicle lifting mechanism, the hoisting mechanism is an electric push rod or an electro-hydraulic push rod; and the electric push rod or the electro-hydraulic push rod comprises an electric motor and a push rod portion having a telescopic push rod, the slide trolley is connected to the telescopic push rod, and the electric motor is arranged in parallel with the push rod portion.

In the foregoing vehicle lifting mechanism, the hoisting mechanism further comprises a pulley located at an output end of the telescopic push rod and a lifting belt arranged around the pulley, one end of the lifting belt is fixed, and the other end thereof is connected to the slide trolley to drive the slide trolley to ascend and descend.

The invention further provides an automated battery swap system, which comprises a battery swap platform and any one of the lifting mechanisms mentioned above, wherein a plurality of the lifting mechanisms are provided corresponding to various vehicle lifting points.

In the foregoing automated battery swap system, the battery swap platform is provided with front and rear positioning portions respectively for positioning and supporting front and rear wheels, the vehicle lifting mechanisms are respectively provided on two sides of the positioning portions in a vehicle width direction, and the lifting arms extend obliquely toward a region between the front and rear positioning portions to extend to the vehicle lifting points.

The advantage and effect of the invention is that a plurality of lifting units capable of being independently controllable in terms of lifting and lowering and a battery swap platform constitute a low-height automated battery swap system which can be deployed in an underground parking lot. Meanwhile, the vehicle lifting mechanism has a simple structure, low manufacturing costs and a high lifting efficiency, and can achieve a rapid battery swap.

### Brief Description of the Drawings

Fig. 1 is a schematic structural diagram of a battery swap platform in the prior art.
Fig. 2 is a schematic structural diagram of an automated battery swap system of the invention.
Fig. 3 is an application scene diagram of the automated battery swap system of the invention.
Fig. 4 is a first side view of a vehicle lifting mechanism of the invention.
Fig. 5 is a second side view of the vehicle lifting mechanism of the invention.
Fig. 6 is a third side view of the vehicle lifting mechanism of the invention.
Fig. 7 is a top view of the vehicle lifting mechanism of the invention.

**[Description of Symbols]**

| | |
|---|---|
| 11: Vehicle lifting mechanism | 12: Vehicle tire footboard |
| 21: Shell | 22: Servo deceleration motor |
| 23: Telescopic push rod | 24: Pulley |
| 25: Lifting belt | 26: Slide trolley |
| 261: First roller set | 262: Second roller set |
| 263: Connecting plate | 27: Lifting arm |
| 28: Guide rail | 3: Battery swap platform |
| 31: V-shaped rollers for coarse vehicle positioning | 32: In-line rollers for coarse vehicle positioning |
| 33: Push rod for coarse wheel positioning | 34: Reserved rack embedding groove |
| 35: Reserved guide rail embedding groove | 36: Guide structure |
| 4: Ramp structure | |

### Detailed Description of Embodiments

The invention is further described in detail below by means of particular embodiments and in conjunction with the accompanying drawings.

Referring to Figs. 2, 3 and 4, this embodiment provides an automated battery swap system, comprising a battery swap platform 3 and vehicle lifting mechanisms. The battery swap platform 3 is provided with front and rear positioning portions respectively for positioning and supporting front and rear wheels, and four mutually independent lifting mechanisms are arranged in two groups symmetrically on two sides of the positioning portions in a vehicle width direction. In other examples, the number of lifting mechanisms may also be more than one, corresponding to that of various vehicle lifting points.

Each lifting mechanism comprises a columnar shell 21, a hoisting mechanism and a slide trolley 26 connected to a lifting arm 27 are mounted in the shell 21, and the lifting arm 27 is located outside the shell 21, extends obliquely toward a region between the front and rear positioning portions so as to extend to a vehicle lifting point, and to support the vehicle lifting point.

The hoisting mechanism is connected to the slide trolley 26 to drive the slide trolley 26 to slide in a vertical direction within the shell 21 so as to implement ascending and descending actions of the lifting arm 27, in turn to realize the ascending and descending of the electric vehicle to complete the automated swapping of a battery pack.

The vehicle lifting mechanism has a simple structure, low manufacturing costs and a high lifting efficiency, and can achieve a rapid battery swap. It should be noted that the vehicle lifting mechanism in this embodiment is suitable not only to the automated battery swap system but also to other scenarios where a vehicle needs to be hoisted.

The term "electric vehicle" in the invention generally refers to a vehicle having a swappable battery pack, and is not limited to a battery electric vehicle, and may also be a hybrid vehicle.

Referring to Figs. 2, 4 and 7, in the lifting mechanism, one end of the lifting arm 27 is connected to the slide trolley 26 via a connecting plate 263 and the other end thereof extends in the direction of the vehicle lifting point, and between two lifting mechanisms on the same side there is a large enough space provided so as to ensure that the battery swap mechanism can freely access and successfully complete the battery swap task.

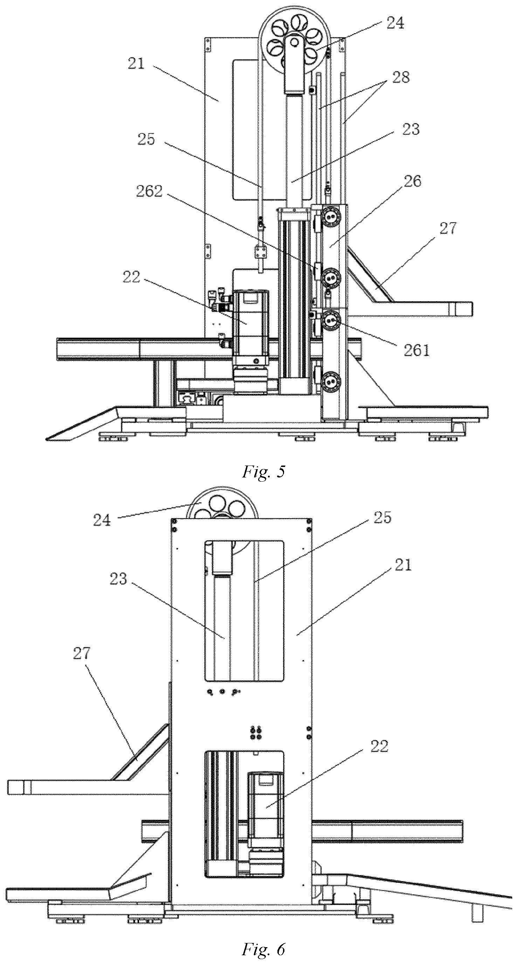

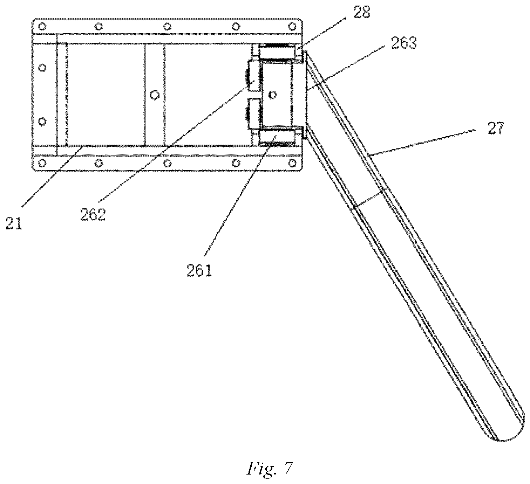

Referring to Figs. 5 and 7, the slide trolley 26 comprises a first roller set 261. An inner wall of the shell 21 is provided with a guide groove formed by parallel guide rails 28 in a sliding direction of the slide trolley 26. The first roller set 261 is arranged within the guide groove in a scrollable manner, and with the guidance of the guide groove, the slide trolley 26 can reciprocate vertically along the guide groove so as to drive the lifting arm 27 to ascend and descend.

The number of first roller sets 261 may be set according to the shell, the slide trolley, and the size of rollers in the roller sets, as well as the supporting strength requirements of the lifting arm 27, for example, may be one or more first roller sets. When the slide trolley 26 has a plurality of first roller sets 261, the first roller sets 261 are in one-to-one correspondence with the guide grooves. That is, each of the first roller sets 261 is provided with a corresponding guide groove. Wherein the plurality of first roller sets 261 may be arranged on the same inner wall or on different inner walls of the shell 21. For example, the plurality of the guide grooves may be respectively provided on a group of inner walls of the shell 21 that face toward each other, so as to ensure the force balancing of the slide trolley 26. In this embodiment, the slide trolley 26 has a substantially rectangular parallelepiped structure, and the lifting arm 27 is connected to one of the side faces thereof. There are two groups of the guide grooves, which are provided respectively on the group of inner walls of the shell 21 that face toward each other. Correspondingly, there are two first roller sets 261, which are provided respectively on two side faces of the slide trolley 26 that face away from each other, and the lifting arm 27 is connected to another side face between the first roller sets 261.

Further, the slide trolley 261 also comprises a second roller set 262. The circumferential surface of the second roller set 262 rests against the top surface of one of the guide rails to balance the force sustained by the lifting arm 27. There are also two second roller sets, which are respectively corresponding to the two guide grooves and respectively rest against the top surface of one of the guide rails in the corresponding guide grooves.

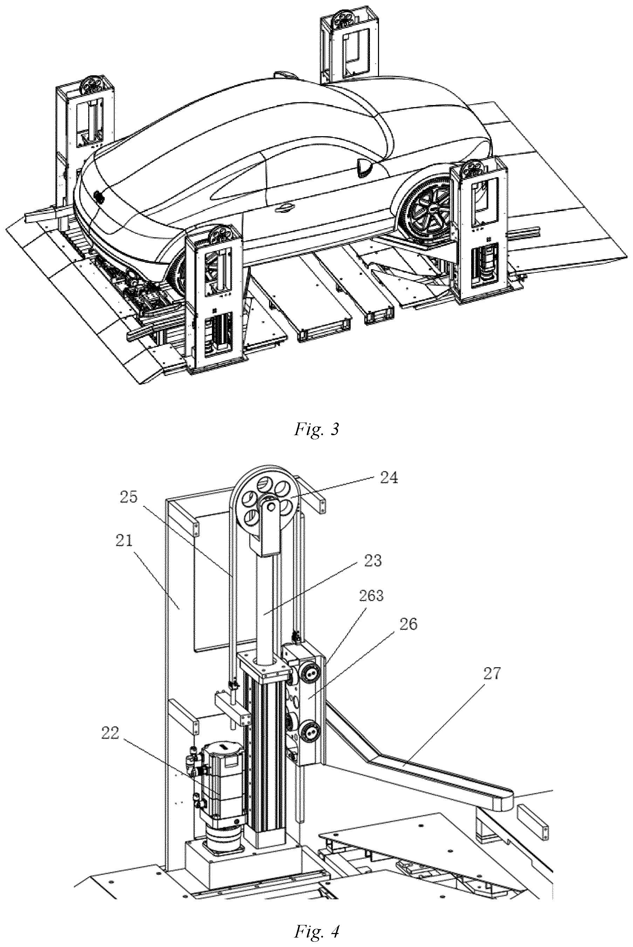

Referring to Figs. 4, 5 and 6, the hoisting mechanism is an electric push rod or an electro-hydraulic push rod. It comprises an electric motor 22 and a push rod portion having a telescopic push rod 23, the slide trolley 26 is connected to the telescopic push rod 23, and the electric motor 22 is arranged in parallel with the push rod portion. By means of the hoisting mechanism, the lifting and lowering of each lifting mechanism can be controlled independently, the synchronous control can be realized, and unevenness due to the weight deviation of the vehicle body at the four lifting points can also be compensated for. A single telescopic push rod 23 can reach a maximum pushing force of 2 tons, and the speed thereof can reach up to 40 mm/s.

The hoisting mechanism further comprises a pulley 24 located at an output end of the telescopic push rod 23 and a lifting belt 25 arranged around the pulley 24. One end of the lifting belt 25 is fixed, and the other end thereof is connected to the slide trolley 26 to drive the slide trolley 26 to ascend and descend. In this embodiment, the lifting belt 25 takes the form of a suspension chain, one end of the suspension chain is fixedly connected to the shell 21, and the other end thereof is connected to the slide trolley 26. In other examples, the lifting belt 25 and the pulley 24 may also be replaced by belts, belt pulleys, etc. In addition, one end of the lifting belt 25 is not limited to being fixed to the shell 21, and may pass through the shell 21 and be fixed to the ground or the battery swap platform 3.

Referring to Fig. 2, the automated battery swap system further comprises a ramp structure 4 connected to the battery swap platform 3, and the ramp structure 4 is arranged at one end or at two ends of the battery swap platform in the entry and exit direction of vehicles, for supporting the vehicle to enter or exit the battery swap platform.

The battery swap platform 3 is provided with V-shaped rollers for coarse vehicle positioning 31, in-line rollers for coarse vehicle positioning 32 and a push rod for coarse wheel positioning 33, and the V-shaped rollers for coarse vehicle positioning 31 are arranged at one end of the battery swap platform 3 (in the vehicle entry direction), and the in-line rollers for coarse vehicle positioning 32 and the push rod for coarse wheel positioning 33 are arranged at the other end of the battery swap platform 3 (in the vehicle entry direction).

Further, the battery swap platform 3 is also provided with a guide structure 36 for guiding the vehicle to enter or exit the battery swap platform 3. It should be noted that the ramp structure 4 and the guide structure 36 are arranged in pairs and are used in combination. One end, where the ramp structure 4 is arranged, is correspondingly provided with the guide structure 36. During the vehicle entering the battery swap platform, the driver can observe the ramp structure 4 and the guide structure 36 so that the vehicle entry direction can be determined.

Further, the battery swap platform 3 is also provided with a reserved rack embedding groove 34 and a reserved guide rail embedding groove 35 for installing a rack and a guide rail which permit a battery swap trolley RGV to be driven into travelling and to pass through.

By means of the four lifting mechanisms and the battery swap platform, the automated battery swap system constitutes a low-height automated battery swap system, the overall height of which can be designed to be less than 2 m, so that the automated battery swap system can be used in an underground parking garage and arranged in a parking slot. The entire system is of an independent modular structure, has a simple structure, can be disassembled and assembled separately, and is easy to transport and install; and the battery swap trolley can pass on one side of the battery swap platform, and the driver can get on and off the vehicle on the other side, so that the system can be applied to the field of rapid battery swapping within 3 minutes.

## Claims

1. A vehicle lifting mechanism for use in a battery swap platform (3) for lifting a vehicle with a battery to be swapped, comprising a columnar shell (21), with a hoisting mechanism and a slide trolley (26) being mounted in the shell (21), wherein a lifting arm (27) is connected to the slide trolley (26), and the lifting arm (27) is used to support a vehicle lifting point; and
the hoisting mechanism is connected to the slide trolley (26) to drive the slide trolley (26) to slide in a vertical direction within the shell (21), so as to implement ascending and descending actions of the lifting arm (27),
one end of the lifting arm (27) is connected to the slide trolley (26) via a connecting plate (263), and the other end thereof extends in a direction of the vehicle lifting point,
the slide trolley (26) comprises a first roller set (261), and the shell (21) is provided with a guide groove formed by parallel guide rails (28) in a sliding direction of the slide trolley (26), the first roller set (261) being arranged in the guide groove in a scrollable manner,
the slide trolley (26) has a plurality of first roller sets (261), and the first roller sets (261) are in one-to-one correspondence with the guide grooves,
a plurality groups of the guide grooves are respectively provided on a group of inner walls of the shell (21) that face toward each other, and
the slide trolley (26) further comprises a second roller set (262), a circumferential surface of the second roller set (262) resting against a top surface of one of the guide rails (28),
**characterized in that** the hoisting mechanism is an electric push rod or an electro-hydraulic push rod; and the electric push rod or the electro-hydraulic push rod comprises an electric motor (22) and a push rod portion having a telescopic push rod (23), the slide trolley is connected to the telescopic push rod (23), and the electric motor (22) is arranged in parallel with the push rod portion.

2. The vehicle lifting mechanism according to claim 1, **characterized in that** the hoisting mechanism further comprises a pulley located at an output end of the telescopic push rod (23) and a lifting belt (25) arranged around the pulley, one end of the lifting belt (25) is fixed, and the other end thereof is connected to the slide trolley (26) to drive the slide trolley (26) to ascend and descend.

3. An automated battery swap system, **characterized by** comprising a battery swap platform (3) and a vehicle lifting mechanism as claimed in any one of claims 1 to 2, wherein a plurality of lifting mechanisms are provided corresponding to various vehicle lifting points.

4. The automated battery swap system according to claim 3, **characterized in that** the battery swap platform (3) is provided with front and rear positioning portions respectively for positioning and supporting front and rear wheels, the vehicle lifting mechanisms are respectively provided on two sides of the positioning portions in a vehicle width direction, and the lifting arms (27) extend obliquely toward a region between the front and rear positioning portions to extend to the vehicle lifting points.

## Patentansprüche

1. Fahrzeughebemechanismus zur Verwendung in einer Batteriewechselplattform (3) zum Anheben eines Fahrzeugs mit einer zu wechselnden Batterie, umfassend ein säulenförmiges Gehäuse (21), wobei ein Hubmechanismus und ein Gleitwagen (26) in dem Gehäuse (21) montiert sind, wobei ein Hebearm (27) mit dem Gleitwagen (26) verbunden ist, und der Hebearm (27) verwendet wird, um einen Fahrzeughebepunkt zu stützen; und
wobei der Hubmechanismus mit dem Gleitwagen (26) verbunden ist, um den Gleitwagen (26) so anzutreiben, dass er in dem Gehäuse (21) in einer vertikalen Richtung gleitet, um Aufwärts- und Abwärtsbewegungen des Hebearms (27) umzusetzen,
wobei ein Ende des Hebearms (27) mit dem Gleitwagen (26) über eine Verbindungsplatte (263) verbunden ist, und sich das andere Ende davon in einer Richtung des Fahrzeughebepunkts erstreckt,
wobei der Gleitwagen (26) einen ersten Rollensatz (261) umfasst, und das Gehäuse (21) mit einer Führungsnut versehen ist, die durch parallele Führungsschienen (28) in einer Gleitrichtung des Gleitwagens (26) ausgebildet ist, wobei der erste Rollensatz (261) in der Führungsnut in einer verschiebbaren Weise angeordnet ist,
wobei der Gleitwagen (26) eine Mehrzahl von ersten Rollensätzen (261) aufweist, und die ersten Rollensätze (261) in eindeutiger Beziehung zu den Führungsnuten stehen,
wobei eine Mehrzahl von Gruppen der Führungsnuten jeweils an einer Gruppe von Innenwänden des Gehäuses (21) bereitgestellt ist, die einander zugewandt sind, und
der Gleitwagen (26) ferner einen zweiten Rollensatz (262) umfasst, wobei eine Umfangsfläche des zweiten Rollensatzes (262) an einer oberen Fläche einer der Führungsschienen (28) aufliegt,
**dadurch gekennzeichnet, dass** der Hubmechanismus eine elektrische Schubstange oder eine elektrohydraulische Schubstange ist; und die elektrische Schubstange oder die elektrohydraulische Schubstange einen Elektromotor (22) und einen Schubstangenabschnitt mit einer Teleskopschubstange (23) umfasst, wobei der Gleitwagen mit der Teleskopschubstange (23) verbunden ist, und der Elektromotor (22) parallel zu dem Schubstangenabschnitt angeordnet ist.

2. Fahrzeughebemechanismus nach Anspruch 1, **dadurch gekennzeichnet, dass** der Hubmechanismus ferner eine Riemenscheibe, die sich an einem Ausgangsende der Teleskopschubstange (23) befindet, und einen Heberiemen (25), der um die Riemenscheibe angeordnet ist, umfasst, wobei ein Ende des Heberiemens (25) feststehend ist und das andere Ende davon mit dem Gleitwagen (26) verbunden ist, um den Gleitwagen (26) so anzutreiben, dass er aufsteigt und absteigt.

3. Automatisiertes Batteriewechselsystem, **dadurch gekennzeichnet, dass** es eine Batteriewechselplattform (3) und einen Fahrzeughebemechanismus nach einem der Ansprüche 1 bis 2 umfasst, wobei eine Mehrzahl von Hebemechanismen entsprechend zu verschiedenen Fahrzeughebepunkten bereitgestellt ist.

4. Automatisiertes Batteriewechselsystem nach Anspruch 3, **dadurch gekennzeichnet, dass** die Batteriewechselplattform (3) jeweils mit vorderen und hinteren Positionierungsabschnitten zum Positionieren und Stützen von Vorder- und Hinterrädern bereitgestellt ist, wobei die Fahrzeughebemechanismen jeweils auf zwei Seiten der Positionierungsabschnitte in einer Fahrzeugbreitenrichtung bereitgestellt sind, und sich die Hebearme (27) schräg hin zu einem Bereich zwischen den vorderen und hinteren Positionierungsabschnitten erstrecken, um sich zu den Fahrzeughebepunkten zu erstrecken.

## Revendications

1. Mécanisme de levage de véhicule pour une utilisation dans une plateforme d'échange de batterie (3) pour lever un véhicule avec une batterie à échanger, comprenant une coque en colonne (21), avec un mécanisme élévateur et un chariot coulissant (26) montés dans la coque (21), un bras de levage (27) étant raccordé au chariot coulissant (26), et le bras de levage (27) étant utilisé pour supporter un point de levage de véhicule ; et
le mécanisme élévateur est raccordé au chariot coulissant (26) pour entraîner le chariot coulissant (26) à coulisser dans une direction verticale à l'intérieur de la coque (21), de façon à mettre en œuvre des actions montantes et descendantes du bras de levage (27),
une extrémité du bras de levage (27) est raccordée au chariot coulissant (26) par l'intermédiaire d'une plaque de raccordement (263), et l'autre extrémité de celui-ci s'étend dans une direction du point de levage de véhicule,
le chariot coulissant (26) comprend un premier ensemble de rouleaux (261), et la coque (21) est pourvue d'une rainure de guidage formée par des rails de guidage parallèles (28) dans une direction de coulissement du chariot coulissant (26), le premier ensemble de rouleaux (261) étant agencé dans la rainure de guidage d'une manière déroulante,
le chariot coulissant (26) a une pluralité de premiers ensembles de rouleaux (261), et les premiers ensembles de rouleaux (261) sont en correspondance bi-univoque avec les rainures de guidage,
une pluralité de groupes des rainures de guidage sont respectivement prévus sur un groupe de parois internes de la coque (21) qui sont tournées l'une vers l'autre,
et
le chariot coulissant (26) comprend en outre un deuxième ensemble de rouleaux (262), une surface circonférentielle du deuxième ensemble de rouleaux (262) reposant contre une surface supérieure de l'un des rails de guidage (28),
**caractérisé en ce que** le mécanisme élévateur est une tige de poussée électrique ou une tige de poussée électro-hydraulique ; et la tige de poussée électrique ou la tige de poussée électro-hydraulique comprend un moteur électrique (22) et une portion de tige de poussée ayant une tige de poussée télescopique (23), le chariot coulissant est raccordé à la tige de poussée télescopique (23), et le moteur électrique (22) est agencé en parallèle avec la portion de tige de poussée.

2. Mécanisme de levage de véhicule selon la revendication 1, **caractérisé en ce que** le mécanisme élévateur comprend en outre une poulie située au niveau d'une extrémité de sortie de la tige de poussée télescopique (23) et une courroie de levage (25) agencée autour de la poulie, une extrémité de la courroie de levage (25) est fixe, et l'autre extrémité de celle-ci est raccordée au chariot coulissant (26) pour entraîner le chariot coulissant (26) à monter et descendre.

3. Système d'échange de batterie automatisé, **caractérisé en ce qu'**il comprend une plateforme d'échange de batterie (3) et un mécanisme de levage de véhicule selon l'une quelconque des revendications 1 à 2, une pluralité de mécanismes de levage étant prévus correspondant à divers points de levage de véhicule.

4. Système d'échange de batterie automatisé selon la revendication 3, **caractérisé en ce que** la plateforme d'échange de batterie (3) est pourvue de portions de positionnement avant et arrière respectivement pour positionner et supporter des roues avant et arrière, les mécanismes de levage de véhicule sont respectivement prévus sur deux côtés des portions de positionnement dans une direction de largeur de véhicule, et les bras de levage (27) s'étendent obliquement vers une région entre les portions de positionnement avant et arrière pour s'étendre jusqu'aux points de levage de véhicule.
